# EUROPÄISCHE PATENTSCHRIFT

(11) **EP 1 974 959 B1**
(45) Veröffentlichungstag und Bekanntmachung des Hinweises auf die Patenterteilung: **09.12.2009**
(21) Anmeldenummer: 08151147.9
(22) Anmeldetag: 07.02.2008
(51) Int. Cl.: B60C 17/00

(54) **Fahrzeugluftreifen**
Pneumatic tyres for a vehicle
Pneus de véhicule

(30) Priorität: 30.03.2007 DE 102007015352
(43) Veröffentlichungstag der Anmeldung: 01.10.2008
(73) Patentinhaber: Continental Aktiengesellschaft, 30165 Hannover (DE)
(72) Erfinder: Fidan, Saddettin, 30827, Garbsen (DE)
(74) Vertreter: Finger, Karsten

(56) Entgegenhaltungen:
- WO-A-01/25032
- WO-A-01/43995
- DE-A1- 2 331 530
- FR-A- 2 395 851
- GB-A- 867 103
- GB-A- 2 033 316
- NL-A- 7 203 518
- US-A1- 2006 060 281

## Beschreibung

Die Erfindung betrifft einen Fahrzeugluftreifen in radialer Bauart mit einem profilierten Laufstreifen, einem Gürtelverband, einer Innenschicht, einer Karkasseinlage, Seitenwänden und mit im Bereich jeder Seitenwand zumindest je einem zwischen der Innenschicht und der Karkasseinlage eingebrachten, im Querschnitt mondsichelförmigen Verstärkungsprofil wobei das Verstärkungsprofil an seiner der Innenschicht zugewandten Innenseite in radialer Richtung gerippt ausgeführt ist, wobei die Innenschicht der Rippenstruktur folgt.

Mit Verstärkungsprofilen in den Seitenwandbereichen versehene Fahrzeugluftreifen sind im Pannenfall, bei einem plötzlichen Druckverlust, zumindest über eine gewisse Laufleistung selbsttragend. Ein selbsttragender Reifen ist beispielsweise aus der DE-A-2 331 530 bekannt. Die aus Gummi bestehenden Verstärkungsprofile weisen eine Dicke von 3 % bis 15 % der maximalen Querschnittsbreite des unter Innendruck befindlichen Reifens auf. Bei den aus der DE-A-29 43 654 bekannten Ausführungen sind in den Seitenwänden des Reifens mehrere Verstärkungsprofile eingebracht, die sich beispielsweise in ihrer Härte voneinander unterscheiden. Aus der WO-A-01/25032 ist es bekannt, das Verstärkungsprofil in einzelne Segmente zu unterteilen, welche durch axial umlaufende Einschnitte voneinander getrennt sind. Nachdem die Verstärkungsprofile dem Reifen in den Seitenwänden eine hohe Biegesteifigkeit verleihen müssen, sind sie vergleichsweise voluminös auszuführen und tragen somit zum Gesamtgewicht des Reifen erheblich bei. Aus der FR-A-78 17645 ist es bekannt, das Verstärkungsprofil an seiner der Innenschicht zugewandten Innenseite in radialer Richtung gerippt auszuführen. Die vorgenannte FR-A-78 17645 wird als nächstliegender Stand der Technik angesehen. Durch die FR-A-78 17645 ist bei einem Fahrzeugluftreifen der eingangs genannten Art erreicht, die Verstärkungsprofile derart auszuführen, dass sie trotz merkbar geringerem Gewicht eine Biegesteifigkeit aufweisen, die zumindest der Biegesteifigkeit bekannter bzw. konventioneller Verstärkungsprofile entspricht. Problematisch ist jedoch, dass Instabilitäten an den Randabschnitten eines deratigen Verstärkungsprofils auftreten können. Der Erfindung liegt daher die Aufgabe zugrunde, bei einem Fahrzeugluftreifen der eingangs genannten Art die Verstärkungsprofile derart auszuführen, dass diese auch in den Randabschnitten stabil sind.

Gelöst wird die gestellte Aufgabe erfindungsgemäß dadurch, dass die Tiefe der Vertiefungen der Rippenstruktur zu den radialen Enden des Verstärkungsprofils kontinuierlich geringer wird.

Durch die gerippte Ausführung der Verstärkungsprofile ist ihre Biegesteifigkeit bei gleichem Gewicht bzw. Volumen an Gummi im Vergleich zu herkömmlichen Verstärkungsprofilen deutlich höher. Werden erfindungsgemäß ausgeführte Verstärkungsprofile derart ausgelegt, dass ihre Biegesteifigkeit jener von Verstärkungsprofilen aus dem Stand der Technik entspricht, sind ihr Volumen und somit ihr Gewicht merklich geringer. Instabilitäten an den Randabschnitten des Verstärkungsprofils sind durch die kontinuierliche Tiefenverringerung der Rippenstruktur an den radialen Enden des Verstärkungsprofils vermieden.

Bei einer bevorzugten Ausführungsform der Erfindung ist die Rippenstruktur über die gesamte oder nahezu die gesamte Radialerstreckung des Verstärkungsprofils ausgebildet. Diese Maßnahme ist einerseits für einen optimalen Versteifungseffekt von Vorteil und bietet darüber hinaus die Möglichkeit, das Volumen und das Gewicht des Verstärkungsprofils optimal zu reduzieren.

Nach einem weiteren Merkmal der Erfindung werden die Vertiefungen der Rippenstruktur derart ausgeführt, dass ihre Tiefe im radial mittleren Bereich des Verstärkungsprofils am größten ist. Auch diese Maßnahme wirkt sich auf das Versteifungsverhalten des Profils günstig aus.

Es gibt eine Vielzahl von Möglichkeiten, die Rippenstruktur gestalterisch auszuführen. Sämtlichen der in dieser Anmeldung beschriebenen und dargestellten Ausführungsvarianten ist es gemeinsam, dass sie sich gut fertigen lassen, bei der Herstellung mit der Innenschicht des Reifens gut verbinden lassen und die erwünschte Biegesteifigkeit des Verstärkungsprofils sicherstellen. Bei einer dieser bevorzugten Ausführungsvarianten besteht die Rippenstruktur aus im Querschnitt wellenförmig ausgeführten Erhebungen und Vertiefungen. Bei einer weiteren vorteilhaften Ausführungsvariante besteht die Rippenstruktur aus im Querschnitt bogenförmig geformten Vertiefungen mit Stegen als Erhebungen. Bei anderen Ausführungsvarianten ist vorgesehen, dass die Rippenstruktur aus im Querschnitt U-förmig geformten Vertiefungen und im Wesentlichen rechteckig geformten Erhebungen besteht oder im Querschnitt eine Zickzackform aufweist.

Die Biegesteifigkeit des Verstärkungsprofils kann dadurch erhöht werden, dass auf der Rippenstruktur zusätzlich zumindest eine Verstärkungslage, insbesondere ein Gewebe, aufgebracht ist.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 einen Querschnitt durch eine Hälfte eines Fahrzeugluftreifens für Personenkraftwagen und
Fig. 2 bis Fig. 5 Ansichten von unterschiedlichen Ausführungsvarianten von Verstärkungsprofilen.

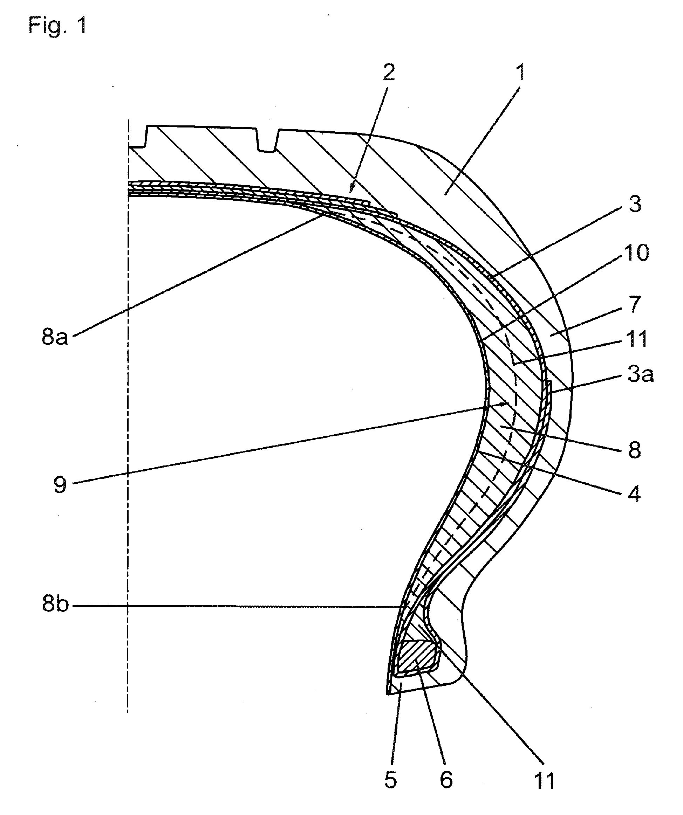

Fig. 1 zeigt einen erfindungsgemäß ausgeführten, bei Druckverlust zumindest über eine gewisse Laufleistung selbsttragenden Fahrzeugluftreifen im Querschnitt. Der Reifen weist einen Laufstreifen 1, einen beispielsweise zwei Gürtellagen aufweisenden Gürtelverband 2, eine ein- oder zweilagig ausgeführte Karkasseinlage 3, eine luftdichte bzw. weitgehend luftdicht ausgeführte Innenschicht 4, Wulstbereiche mit Wulstkernen 5 und Kernprofilen 6, Seitenwände 7 und Verstärkungsprofile 8 auf.

Die Gürtellagen können in bekannter Weise aus in eine Gummimischung eingebetteten Festigkeitsträgern, insbesondere Stahlkorden, bestehen, welche innerhalb jeder Lage parallel zueinander verlaufen, wobei die Stahlkorde in einander benachbarten Lagen zueinander gekreuzt verlaufen und mit der Umfangsrichtung des Reifens einen Winkel im Bereich zwischen 15° und 28° einschließen. Die Verstärkungsprofile 8 bestehen aus Gummi und sind zwischen der Innenschicht 4 und der Karkasseinlage 3 angeordnet, sie verleihen dem Reifen bei Druckverlust eine Selbsttragefähigkeit, sodass eine Weiterfahrt über einen gewissen Zeitraum und bei verminderter Geschwindigkeit möglich ist.

Die Karkasseinlage 3 umläuft die Wulstkerne 5 von innen nach außen, ist auf sich selbst rückgeführt und endet in einer Höhe, die radial innerhalb oder radial außerhalb der Stelle mit der größten Querschnittsbreite des Reifens liegen kann.

Jedes Verstärkungsprofil 8 verläuft zwischen der Innenschicht 4 und der Karkasseinlage 3 kreisringförmig an der Innenseite der Seitenwände 7 und erstreckt sich von knapp radial außerhalb des Wulstkernes 5 bis unter die seitlichen Randabschnitte des Gürtelverbandes 2. Ihre größte Breite weisen die Verstärkungsprofile 8 etwa dort auf, wo der Reifen seine größte Querschnittsbreite besitzt.

Erfindungsgemäß ausgeführte Verstärkungsprofile 8 sind an ihren Innenseiten, die dem Reifeninnenraum zugewandt sind, speziell geformt. Die Innenseite jedes Verstärkungsprofils 8 ist mit einer Rippenstruktur 9 aus abwechselnd vorgesehenen und in radialer Richtung orientierten Erhebungen 10 und Vertiefungen 11 versehen. Die Rippenstruktur 9 nimmt einen Kreisring ein, welcher konzentrisch zu dem äußeren kreisförmigen Rand 8a und zu dem inneren kreisförmigen Rand 8b des Verstärkungsprofils 8 verläuft. Zwischen der Rippenstruktur 9 und den Rändern 8a und 8b verbleiben schmale, vorzugsweise einige Millimeter breite kreisringförmige Randbereiche, die nicht strukturiert sind, um die Formstabilität der spitz zusammenlaufenden Randbereiche des Verstärkungsprofils 8 zu gewährleisten. Aus Gründen der Reifengleichförmigkeit sind sämtliche Erhebungen 10 und sämtliche Vertiefungen 11 jeweils übereinstimmend ausgeführt. Die Rippenstruktur 9 ist für die Biegesteifigkeit der Verstärkungsprofile 8 von großem Vorteil, wobei, je nach Ausführung, die Rippenstruktur 9 das Gummivolumen und damit das Gewicht des Verstärkungsprofils 8 verkleinern kann, sodass ein Verstärkungsprofil 8 mit einem geringeren Gewicht und einem geringeren Volumen die gleiche Biegesteifigkeit aufweisen kann wie ein herkömmlich ausgeführtes Verstärkungsprofil mit einem höherem Gewicht und einem höheren Volumen. Wird ein erfindungsgemäß ausgeführtes Verstärkungsprofil 8 derart ausgelegt, dass es ein einem üblichen Verstärkungsprofil entsprechendes Gewicht aufweist, weist es eine deutlich höhere Biegesteifigkeit auf.

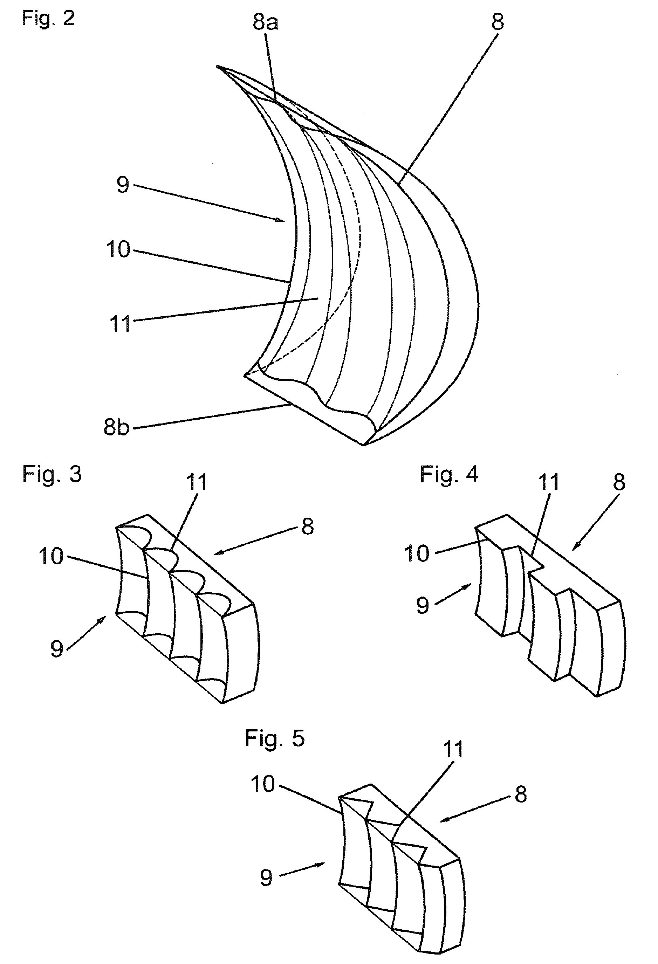

Fig. 2 bis Fig. 5 zeigen Ausführungsvarianten der Rippenstruktur 9 an den Innenseiten eines Verstärkungsprofils 8. In Fig. 2 besteht die Rippenstruktur aus gerundet ausgeführten Erhebungen 10 (Rippen) und dazwischen befindlichen Vertiefungen 11. Im Querschnitt ergibt sich daher eine Wellenform. Die Erhebungen 10 reichen bei dieser Ausführungsform bis zur Einhüllenden der Innenseite. Die Erstreckung der Vertiefungen 11 in das Profil 8 kann insofern variieren, als dass die Vertiefungen 11 in Richtung zu den Rändern 8a, 8b zunehmend flacher werden und ihre größte Tiefe im mittleren Bereich des Profils 8 aufweisen. Die Ausführung wird daher insbesondere so getroffen, dass die Vertiefungen 11 der Querschnittsform des Profils 18 folgen. An den radialen Enden der Vertiefungen 11 kann ein weitgehend stufenfreier Auslauf vorliegen.

Fig. 3 bis 5 zeigen Ansichten von Ausschnitten aus erfindungsgemäß ausgeführten Verstärkungsprofilen 8. Bei der in Fig. 3 gezeigten Ausführungsform besteht die Rippenstruktur 9 aus im Querschnitt bogenförmigen, insbesondere kreisbogenförmigen Vertiefungen, die nahezu unmittelbar aneinander anschließen, sodass zwischen den Vertiefungen 11 nur schmale Stege die Erhebungen 10 bilden. Fig. 4 zeigt eine Ausführungsvariante mit einer Rippenstruktur 9 aus im Wesentlichen im Querschnitt U-förmigen Vertiefungen und komplementär dazu und daher rechteckförmig ausgeführten Erhebungen 10. Bei der in Fig. 5 gezeigten Ausführungsvariante verlaufen die Vertiefungen 11 und die Erhebungen 10 im Querschnitt entlang einer Zickzack-Form und sind daher im Querschnitt dreieckförmig. Bei sämtlichen Ausführungsvarianten gelten bezüglich der Dimensionierung der Vertiefungen 11 bzw. Erhebungen 10 in radialer Richtung die obigen Ausführungen zu Fig. 2.

Die auf der Innenseite der Verstärkungsprofile 8 befindliche Innenschicht 4 wird derart ausgeführt und bei der Herstellung des Reifens derart vorgeformt, dass sie der Rippenstruktur 9 an der Innenseite des Verstärkungsprofiles 8 folgend anliegt. Gemäß einer weiteren, nicht gezeigten Ausführungsvariante kann auf die Innenseite der Verstärkungsprofile 8 ein Gewebe aus textilen oder metallischen Verstärkungsfäden aufgebracht sein, welches ebenfalls den Erhebungen und in den Vertiefungen folgend aufgebracht ist.

Es ist ferner möglich, erfindungsgemäß ausgeführte Verstärkungsprofile mehrteilig auszuführen oder in Kombination mit weiteren Verstärkungsprofilen zu verwenden.

### Bezugszeichenliste

- 1: Laufstreifen
- 2: Gürtelverband
- 3: Karkasseinlage
- 4: Innenschicht
- 5: Wulstkerne
- 6: Kernprofile
- 7: Seitenwand
- 8: Verstärkungsprofile
- 8a: Ränder
- 8b: Ränder
- 9: Rippenstruktur
- 10: Erhebungen
- 11: Vertiefungen

## Patentansprüche

1. Fahrzeugluftreifen in radialer Bauart mit einem profilierten Laufstreifen (1), einem Gürtelverband (2), einer Innenschicht (4), einer Karkasseinlage (3), Seitenwänden (7) und mit im Bereich jeder Seitenwand (7) zumindest je einem zwischen der Innenschicht (4) und der Karkasseinlage (3) eingebrachten, im Querschnitt mondsichelförmigen Verstärkungsprofil (8),
wobei das Verstärkungsprofil (8) an seiner der Innenschicht (4) zugewandten Innenseite in radialer Richtung gerippt ausgeführt ist, wobei die Innenschicht (4) der Rippenstruktur (9) folgt, **dadurch gekennzeichnet, dass** die Tiefe der Vertiefungen (11) der Rippenstruktur (9) zu den radialen Enden des Verstärkungsprofils (8) kontinuierlich geringer wird.

2. Fahrzeugluftreifen nach Anspruch 1, **dadurch gekennzeichnet, dass** die Rippenstruktur (9) über die gesamte oder nahezu die gesamte Radialerstreckung des Verstärkungsprofils (8) ausgebildet ist.

3. Fahrzeugluftreifen nach Anspruch 1 oder 2, **dadurch gekennzeichnet, dass** die Vertiefungen (11) der Rippenstruktur (9) eine Tiefe aufweisen, die im radial mittleren Bereich des Verstärkungsprofils (8) am größten ist.

4. Fahrzeugluftreifen nach einem der Ansprüche 1 bis 3, **dadurch gekennzeichnet, dass** die Rippenstruktur (9) aus im Querschnitt wellenförmig ausgeführten Erhebungen (10) und Vertiefungen (11) besteht.

5. Fahrzeugluftreifen nach einem der Ansprüche 1 bis 3, **dadurch gekennzeichnet, dass** die Rippenstruktur (9) aus im Querschnitt bogenförmig geformten Vertiefungen (11) mit Stegen als Erhebungen (10) besteht.

6. Fahrzeugluftreifen nach einem der Ansprüche 1 bis 3, **dadurch gekennzeichnet, dass** die Rippenstruktur (9) aus im Querschnitt U-förmig geformten Vertiefungen (11) und rechteckig geformten Erhebungen (10) besteht.

7. Fahrzeugluftreifen nach einem der Ansprüche 1 bis 3, **dadurch gekennzeichnet, dass** die Rippenstruktur (9) im Querschnitt eine Zickzack-Form aufweist.

8. Fahrzeugluftreifen nach einem der Ansprüche 1 bis 7, **dadurch gekennzeichnet, dass** auf der Rippenstruktur (9) eine Verstärkungslage, insbesondere ein Gewebe, aufgebracht ist.

## Claims

1. Pneumatic vehicle tyre of a radial type of construction with a profiled tread rubber (1), a breaker belt assembly (2), an inner layer (4), a carcass insert (3), sidewalls (7) and at least one cross-sectionally crescent-shaped reinforcing profile (8) respectively incorporated between the inner layer (4) and the carcass insert (3) in the region of each sidewall (7), the reinforcing profile (8) being of a ribbed configuration in the radial direction on its inner side facing the inner layer (4), the inner layer (4) following the ribbed structure (9), **characterized in that** the depth of the depressions (11) of the ribbed structure (9) becomes continuously smaller towards the radial ends of the reinforcing profile (8).

2. Pneumatic vehicle tyre according to Claim 1, **characterized in that** the ribbed structure (9) is formed over the entire, or virtually the entire, radial extent of the reinforcing profile (8).

3. Pneumatic vehicle tyre according to Claim 1 or 2, **characterized in that** the depressions (11) of the ribbed structure (9) have a depth which is at the greatest in the radially central region of the reinforcing profile (8).

4. Pneumatic vehicle tyre according to one of Claims 1 to 3, **characterized in that** the ribbed structure (9) comprises elevations (10) and depressions (11) of a cross-sectionally corrugated configuration.

5. Pneumatic vehicle tyre according to one of Claims 1 to 3, **characterized in that** the ribbed structure (9) comprises cross-sectionally arcuately shaped depressions (11) with webs as elevations (10).

6. Pneumatic vehicle tyre according to one of Claims 1 to 3, **characterized in that** the ribbed structure (9) comprises cross-sectionally U-shaped depressions (11) and rectangularly shaped elevations (10).

7. Pneumatic vehicle tyre according to one of Claims 1 to 3, **characterized in that** the ribbed structure (9) has a zigzag form in cross section.

8. Pneumatic vehicle tyre according to one of Claims 1 to 7, **characterized in that** a reinforcing ply, in particular a woven fabric, is applied to the ribbed structure (9).

## Revendications

1. Bandage pneumatique pour roue de véhicule, à structure radiale et bande de roulement (1) profilée, avec un ensemble de ceinture (2), une couche intérieure (4), une garniture de carcasse (3), des parois latérales (7) et dans la zone occupée par chaque paroi latérale (7) au moins un profilé de renfort (8) placé entre la couche intérieure (4) et la garniture de carcasse (3) et dont la section transversale est en forme de croissant de lune,
le profilé de renfort (8) étant nervuré dans la direction radiale sur son côté intérieur tourné vers la couche intérieure (4), la couche intérieure (4) suivant la structure nervurée (9),
**caractérisé en ce que**
la profondeur des creux (11) de la structure nervurée (9) diminue de manière continue en direction des extrémités radiales du profilé de renfort (8).

2. Bandage pneumatique pour roue de véhicule selon la revendication 1, **caractérisé en ce que** la structure nervurée (9) est formée sur toute l'extension radiale ou presque toute l'extension radiale du profilé de renfort (8).

3. Bandage pneumatique pour roue de véhicule selon les revendications 1 ou 2, **caractérisé en ce que** les creux (11) de la structure nervurée (9) présentent leur plus grande profondeur dans la partie radialement centrale du profilé de renfort (8).

4. Bandage pneumatique pour roue de véhicule selon l'une des revendications 1 à 3, **caractérisé en ce que** la structure nervurée (9) est constituée de débords (10) et de creux (11) à section transversale ondulée.

5. Bandage pneumatique pour roue de véhicule selon l'une des revendications 1 à 3, **caractérisé en ce que** la structure nervurée (9) est constituée de creux (11) dont la section transversale a une forme incurvée et de nervures formant les débords (10).

6. Bandage pneumatique pour roue de véhicule selon l'une des revendications 1 à 3, **caractérisé en ce que** la structure nervurée (9) est constituée de creux (11) à section transversale en forme de U et de débords (10) de forme rectangulaire.

7. Bandage pneumatique pour roue de véhicule selon l'une des revendications 1 à 3, **caractérisé en ce que** la structure nervurée (9) a une section transversale en forme de zigzag.

8. Bandage pneumatique pour roue de véhicule selon l'une des revendications 1 à 7, **caractérisé en ce qu'**une couche de renfort, en particulier un tissu, est appliquée sur la structure nervurée (9).
